# EUROPÄISCHE PATENTSCHRIFT

(11) **EP 1 926 627 B1**
(45) Veröffentlichungstag und Bekanntmachung des Hinweises auf die Patenterteilung: **16.03.2011**
(21) Anmeldenummer: 06791650.2
(22) Anmeldetag: 25.08.2006
(51) Int. Cl.: B60N 2/20, B60N 2/32

(54) **FAHRZEUGSITZ**
VEHICLE SEAT
SIEGE DE VEHICULE A MOTEUR

(30) Priorität: 09.09.2005 DE 102005043254; 28.04.2006 DE 102006020370
(43) Veröffentlichungstag der Anmeldung: 04.06.2008
(73) Patentinhaber: Johnson Controls GmbH, 51399 Burscheid (DE)
(72) Erfinder: BOUDINOT, Richard, 40625 Düsseldorf (DE); FAHL, Michael, 51491 Overrath (DE); LEE, Glen, 50829 Köln (DE); KIENKE, Ingo, 42929 Wermelskirchen (DE); WEBER, Frank, 51519 Odenthal (DE); MAHARAJAPURAM, Karthikeyan, S., 51399 Burscheid (DE)
(74) Vertreter: Liedtke, Markus
(86) Internationale Anmeldenummer: PCT/EP2006/008334
(87) Internationale Veröffentlichungsnummer: WO 2007/028506

(56) Entgegenhaltungen:
- EP-A- 1 747 936
- EP-A1- 1 468 867
- DE-A1- 10 202 614
- FR-A1- 2 241 426

## Beschreibung

Die Erfindung betrifft einen Fahrzeugsitz mit einem Sitzteil und einer Rückenlehne, welche von einer im Wesentlichen aufrechten Gebrauchsstellung unter Wirkung einer Federeinrichtung in eine im Wesentlichen horizontale Ladestellung klappbar ist, wobei beim Vorklappen aus der Gebrauchsstellung in die Ladestellung mittels der Federeinrichtung bis zum Erreichen einer Zwischenstellung eine in Richtung der Ladestellung gerichtete Federkraft bzw. ein entsprechend gerichtetes Drehmoment erzeugbar ist.

### Stand der Technik

Ein Fahrzeugsitz ist aus der deutschen Patentanmeldung DE 10 2004 002 795 A1 bekannt. Bei diesem Fahrzeugsitz unterstützt eine Federeinrichtung das Vorklappen der Rückenlehne nur bis zu einer Zwischenstellung. Nachfolgend wird die Feder abgekoppelt, so dass nur noch die Schwerkraft der Rückenlehne in Richtung der Ladestellung wirkt.

Ein Fahrzeugsitz ist aus der deutschen Patentanmeldung DE 10 2004 054 165 A1 bekannt.

Bei einem aus der deutschen Patentanmeldung DE 10202614A1 bekannten Fahrzeugsitz ist die Anordnung einer Kompensationsfeder bekannt, die eine Lehne mit einem Kompensationsmoment beaufschlagt und nach vorne spannt.

### Aufgabe

Der Erfindung liegt die Aufgabe zugrunde, die Kontrolle des Bewegungsablaufes beim Vorklappen der Rückenlehne aus der Gebrauchsstellung in die Ladestellung weiter zu verbessern.

### Lösung

Die Aufgabe wird erfindungsgemäß durch die in Anspruch 1 angegebene Merkmalskombination gelöst.

Die Federeinrichtung erzeugt somit in Ladestellung der Rückenlehne ein auf diese in Richtung der Gebrauchsstellung wirkendes, dem in Richtung der Ladestellung wirkenden ersten Drehmoment entgegen gerichtetes zweites Drehmoment. Die Lehne wird hierdurch beim Vorklappen von der Federeinrichtung in einer Zwischenstellung gehalten und muss nachfolgend gegen den Widerstand der Federeinrichtung in die Ladestellung geschwenkt und in dieser Position verrastet werden. Nach dem Lösen der Verrastung schwenkt die Rückenlehne durch die Federkraft selbständig in die Zwischenstellung zurück und kann dort problemlos händisch erfasst und in die Gebrauchsstellung zurückgeklappt werden.

Die Unteransprüche betreffen bevorzugte Ausführungen der Erfindung.

### Figuren

Die Figuren stellen beispielhaft und schematisch verschiedene Ausführungen der Erfindung dar.

Es zeigen:
- Fig. 1: einen erfindungsgemäßen Fahrzeugsitz in verschiedenen Stellungen,
- Fig. 2: einen Blick auf eine zur Durchführung der Erfindung geeignetes Federeinrichtung,
- Fig. 3: eine Darstellung der von dieser Federeinrichtung erzeugten Drehmomente,
- Fig. 4: einen nicht erfindungsgemäßen Fahrzeugsitz, und
- Fig. 5: einen Fahrzeugsitz nach einer weiteren Ausbildung der Erfindung in verschiedenen Stellungen.

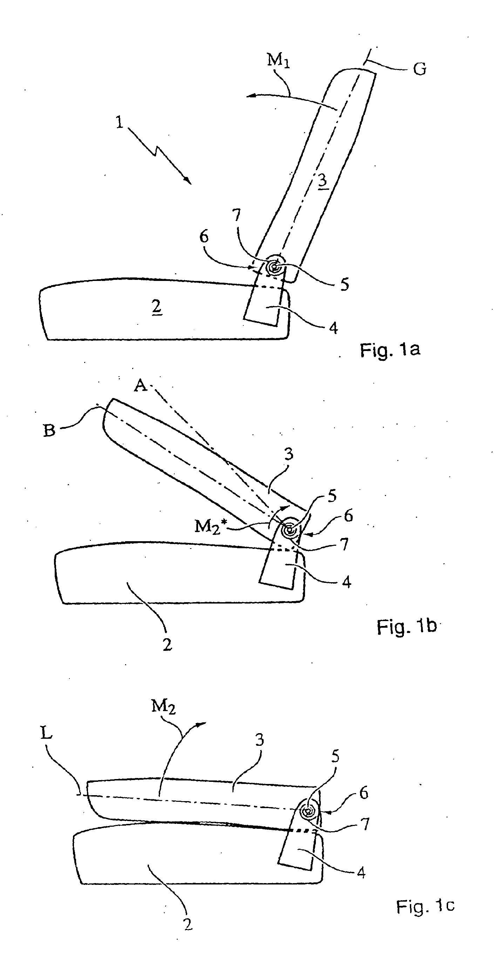

Der in Fig. 1 abgebildete Fahrzeugsitz 1 besteht aus einem Sitzteil 2 und einer Rückenlehne 3, die mit dem Sitzteil 2 über einen Neigungsversteller 4 um eine horizontale, quer zur Sitzrichtung verlaufende Drehachse 5 verbunden ist.

Die Rückenlehne 3 kann nach dem Lösen einer Rasteinrichtung im Neigungsversteller 4 aus ihrer aufrechten Gebrauchsstellung G (Fig. 1 a) nach vorne auf das Sitzteil 2 in eine etwa waagerechte Ladestellung L (Fig. 1 c) geklappt und in dieser Position erneut durch den Neigungsversteller 4 (oder eine beliebige andere Einrichtung) verrastet werden.

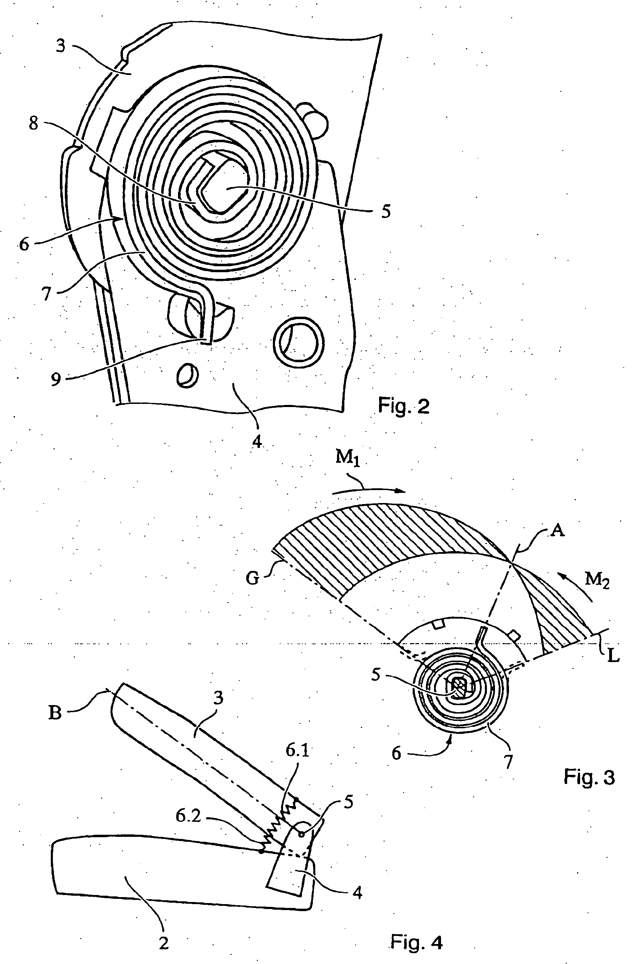

Im Bereich der Drehachse 5 ist der Neigungsversteller 4 mit einer Federeinrichtung 6 mit einem einzelnen Federelement 6.1 in Form einer Spiralfeder 7 (Fig. 2) ausgestattet, deren innenliegendes Ende 8 drehfest mit der Rückenlehne 3 und deren außenliegendes Ende 9, mit Abstand zur Drehachse 5, fest mit dem Neigungsversteller 4 verbunden ist. Die Spiralfeder 7 ist so vorgespannt, dass sie in Gebrauchsstellung G der Rückenlehne 3 ein nach vorne in Richtung deren Ladestellung L wirkendes erstes Drehmoment M1 und in Ladestellung L der Rückenlehne 3 ein entgegen gerichtetes Drehmoment M2 erzeugt. Beim Verklappen der Rückenlehne 3 durchläuft die Spiralfeder 7 somit eine erste Zwischenstellung A, in welcher sie spannungsfrei ist. Durch ihr Eigengewicht verharrt die Rückenlehne 3 beim Vorklappen in einer zweiten Zwischenstellung B, die gegenüber der Zwischenstellung A schwerkraftbedingt ein wenig in Richtung der Ladestellung L vorgeschwenkt ist. Dabei wird in der Spiralfeder 7 bereits ein rückstellendes Moment M2* aufgebaut, welches (unter Vernachlässigung von Reibungskräften) gerade eben das Eigengewicht der Rückenlehne 3 kompensiert.

Anstelle eines in beide Drehrichtungen wirkenden Federelements 6.1 können gemäß einer nicht erfindungsgemäßen Anspruch, wie in Fig. 4 gezeigt, zwei gesonderte Federelemente 6.1 und 6.2 zum Einsatz gelangen, welche gemeinsam die in Fig. 3 gezeigte Federcharakteristik aufweisen, wobei das Federelement 6.1 in Gebrauchsstellung der Rückenlehne 3 das Drehmoment M1 und das Federelement 6.2 in Ladestellung der Rückenlehne 3 das rückstellende Drehmoment M2 erzeugt. In der Zwischenstellung A ist das von den Federelementen 6.1 und 6.2 resultierend erzeugte Drehmoment gerade Null, wobei beide Drehmomente M1, M2 jeweils den Wert Null annehmen oder sich aber gerade eben kompensieren, das Drehmoment M1 also den gleichen Betrag wie das Drehmoment M2, aber die entgegen gesetzte Drehrichtung aufweist.

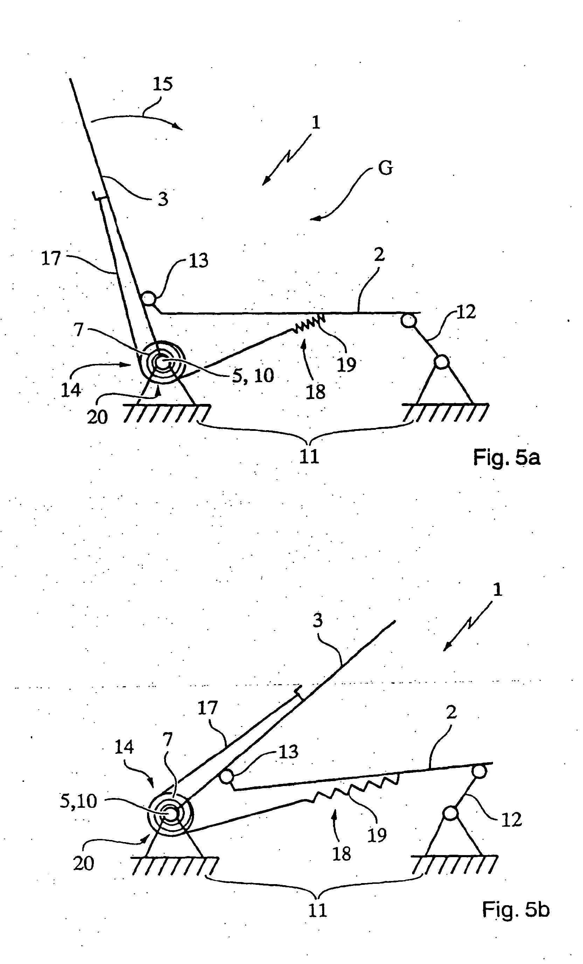

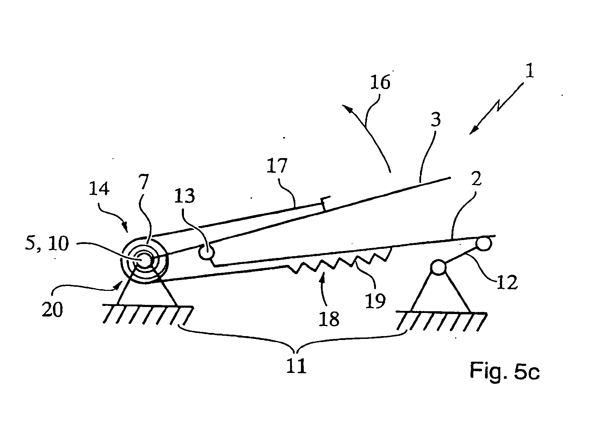

Bei dem in Fig. 5a dargestellten Fahrzeugsitz 1 ist die Rückenlehne 3 an ihrem unteren Ende über eine Gelenk 10 mit einer Drehachse 5 unmittelbar mit dem Fahrzeugboden 11 schwenkbar verbunden. Das Sitzteil 2 ist an seinem vorderen Ende über einen Gelenkarm 12 an dem Fahrzeugboden 11 angelenkt und an seinem hinteren Ende mittels eines oberhalb des Gelenks 10 befindlichen weiteren Gelenk 13 drehbar an der Rückenlehne 3 angeordnet. Beim Vorklappen der Rückenlehne 3 aus ihrer in etwa senkrechten Gebrauchsstellung G nach Fig. 5a in die näherüngsweise waagerechte Ladestellung L nach Fig. 5c wird das Sitzteil 2 zwangsweise nach vorne und unten verlagert.

Im Bereich des Gelenks 10 wirkt die Federeinrichtung derart, dass sie in Gebrauchsstellung G der Rückenlehne 3 ein nach vorne in Richtung der Ladestellung L gerichtetes Moment (Pfeil 15) und in Ladestellung L ein nach hinten in Richtung der Gebrauchsstellung gerichtetes Moment (Pfeil 16) erzeugt. Es versteht sich, dass die an der drehbaren Rückenlehne 3 angreifende Federkräfte ein entsprechendes Drehmoment M1, M2 um die Drehachse 5 bewirkten. Mittels eines biegeschfaffen Übertragungselements 17 ist ferner ein weiteres Federelement 18, insbesondere ein Gummizug 19, zwischen Rückenlehne 3 und Sitzteil 2 angeordnet. Das Übertragungselement 17 ist im oberen Bereich der Rückseite der Rückenlehne 3 befestigt und wird um eine drehfeste, stangenartige Umlenkung 20 im Bereich des Gelenks 10 um etwa 90° in Richtung der Unterseite des Sitzteils 2 umgelenkt. Dort ist es mit seinem freien Ende mit dem Gummizug 19 verbunden, der seinerseits anderen Endes an der Unterseite des Sitzteils 2 befestigt ist.

In Gebrauchsstellung der Rückenlehne 3 ist der Gummizug 19 nahezu ungespannt. Das Vorklappen der Rückenlehne 3, welches zunächst durch die Spiralfeder 7 unterstützt wird, führt zu einem Spannen des Gummizugs 19 und damit zum Entstehen einer dem Vorklappen entgegen gerichteten Kräft. Beim Erreichen der Zwischenstellung A nach Fig. 5b hebt diese Gegenkraft das Drehmoment der Spiralfeder 7 gerade auf, so dass nur noch die Gewichtskraft der Rückenlehne 3 in Richtung der Ladestellung L wirkt. Beim weiteren Vorklappen kehrt sich auch die Wirkrichtung der Spiralfeder 7 um, so dass letztlich die Rückenlehne 3 nahezu kraftfrei ihre Ladestellung L nach Fig. 5c einnimmt. Die Federeinrichtung 6 kompensiert also das Gewicht der Rückenlehne 3 erst in der Ladestellung. Eine Zwischenstellung B in Fig. 1b entsprechende Position gibt es bei diesem Fahrzeugsitz somit nicht.

Bei diesem Vorgang gleitet das Übertragungselement 17, das beispielsweise aus einem Überhang einer rückseitigen Textilverkleidung der Rückenlehne 3 gebildet wird, über die Umlenkung 20 und erzeugt dort eine Gleitreibung, welche den Bewegungsablauf zusätzlich dämpft.

### Bezugszeichen

- 1: Fahrzeugsitz
- 2: Sitzteil
- 3: Rückenlehne
- 4: Neigungsversteller
- 5: Drehachse
- 6: Federeinrichtung
- 6.1, 6.2: Federelement
- 7: Spiralfeder
- 8: inneres Ende (der Spiralfeder)
- 9: äußeres Ende (der Spiralfeder)
- 10: Gelenk
- 11: Fahrzeugboden
- 12: Gelenkarm
- 13: Gelenk
- 14: Federelement
- 15: Pfeil (Richtung Moment M1)
- 16: Pfeil (Richtung Moment M2)
- 17: Übertragungselement
- 18: Federelement
- 19: Gummizug
- 20: Umlenkung

- M1, M2, M2*: Drehmomente

- G: Gebrauchsstellung
- L: Ladestellung
- A: erste Zwischenstellung (Kein Moment wird erzeugt)
- B: zweite Zwischenstellung (Lehnengewicht berücksichtigt)

## Patentansprüche

1. Fahrzeugsitz (1) mit einem Sitzteil (2) und einer Rückenlehne (3), welche von einer im Wesentlichen aufrechten Gebrauchsstellung (G) unter Wirkung einer Federeinrichtung (6) in eine im Wesentlichen horizontale Ladestellung (L) klappbar ist, wobei beim Vorklappen aus der Gebrauchsstellung in die Ladestellung mittels der Federeinrichtung bis zum Erreichen einer ersten Zwischenstellung (A), an der die Federeinrichtung Kein Moment erzeugt, eine in Richtung der Ladestellung gerichtete Federkraft (F1) oder ein entsprechend gerichtetes Drehmoment (M1) erzeugbar ist, wobei mittels der Federeinrichtung (6) beim Überschreiten der Zwischenstellung (A) eine entgegen der Richtung der Ladestellung (L) gerichtete Federkraft (F2) oder ein entsprechendes Drehmoment (M2) erzeugbar ist, wobei die Federeinrichtung (6) ein erstes Federelement (14) in Form einer Spiralfeder (7) aufweist, welche in einem Gelenk (10) der Rückenlehne (3) wirkt.

2. Fahrzeugsitz nach Anspruch 1, **dadurch gekennzeichnet, dass** beim Zurückklappen der Rückenlehne (3) aus der Ladestellung (L) in die Gebrauchsstellung (G) mittels der Federeinrichtung (6) bis zum Erreichen einer Zwischenstellung (A) eine in Richtung der Gebrauchsstellung gerichtete Federkraft (F2) oder ein entsprechendes Drehmoment (M2) erzeugbar ist und beim Überschreiten der Zwischenstellung (A) eine entgegen der Richtung der Gebrauchsstellung gerichtete Federkraft (F1) oder ein entsprechendes Drehmoment (M1) erzeugbar ist.

3. Fahrzeugsitz nach Anspruch 1 oder 2, **dadurch gekennzeichnet, dass** beide Federkräfte (F1, F2) oder Drehmomente (M1, M2) von einem in beide Richtungen wirkenden Federelement (6.1) erzeugbar sind.

4. Fahrzeugsitz nach einem der vorhergehenden Ansprüche, **dadurch gekennzeichnet, dass** die Federeinrichtung (6) ein weiteres Federelement (18), insbesondere einen Gummizug (19) aufweist, welches an einem Ende über ein vorzugsweise biegeschlaffes Übertragungselement (17) mit der Rückenlehne (3) dem Fahrzeugsitzes (1) verbunden ist.

5. Fahrzeugsitz nach Anspruch 4, **dadurch gekennzeichnet, dass** durch das Übertragungselement (17) und/oder das zweite Federelement (18) beim Vorklappen der Rückenlehne (3) im Bereich der Drehachse (5) eine Reibkraft erzeugbar ist.

6. Fahrzeugsitz nach Anspruch 5, **dadurch gekennzeichnet, dass** das Sitzteil (2) an seinem hinteren Ende mittels eines Gelenks (13) drehbar mit der Rückenlehne (3) verbunden und bei deren Vorklappen absenkbar ist, wobei das zweite Federelement (18) an seinem anderen Ende mit dem Sitzteil (2) verbunden ist.

## Claims

1. A vehicle seat (1) with a seat part (2) and a backrest (3) foldable from a substantially upright usage position (G) into a substantially horizontal loading position (L) using a spring device (6),
whereas a spring force (F 1) oriented towards the loading position or a correspondingly oriented torque (M1) can be generated when folding forward the backrest (3) from the usage position into the loading position by means of the spring device until reaching a first intermediate position (A), at which the spring device does not generate a torque, whereas a spring force (F2) oriented counter to the direction of the loading position (L) or a corresponding torque (M2) can be generated by means of the spring device (6) when exceeding the intermediate position (A),
whereas the spring device (6) comprises a first spring element (14) formed as a spiral spring (7) which acts in a joint (10) of the backrest (3).

2. The vehicle seat according to claim 1, **characterized in that** a spring force (F2) oriented in the direction of the usage position or a corresponding torque (M2) can be generated by means of the spring device (6) until reaching an intermediate position (A) when folding back the backrest (3) from the loading position (L) into the usage position (G) and a spring force (F1) oriented counter to the direction of the usage position or a corresponding torque (M1) can be generated when exceeding the intermediate position (A).

3. The vehicle seat according to claim 1 or 2, **characterized in that** both spring forces (F1, F2) or torques (M1, M2) can be generated by a spring element (6.1) acting in both directions.

4. The vehicle seat according to one of the preceding claims, **characterized in that** the spring device (6) comprises another spring element (18), especially a rubber cord (19), which at one end is connected to the backrest (3) of the vehicle seat (1) via a preferably flexible transmission element (17).

5. The vehicle seat according to claim 4, **characterized in that** a frictional force can be generated in the region of the rotational axis (5) by the transmission element (17) and/or by the second spring element (18) when folding forward the backrest (3).

6. The vehicle seat according to claim 5, **characterized in that** the seat part (2) at its posterior end is rotatably connected with the backrest (3) by means of a joint (13) and can be lowered when folding forward the backrest (3), whereas the second spring element (18) at its other end is connected to the seat part (2).

## Revendications

1. Siège de véhicule à moteur (1) avec une partie d'assise (2) et un dossier (3) pouvant être rabattu d'une position d'utilisation (G) sensiblement verticale vers une position de chargement (L) sensiblement horizontale sous l'action d'un dispositif à ressort (6), une force de ressort (F1) orientée dans la direction de la position de chargement ou un couple de rotation (M1) orienté de manière correspondante pouvant être générés lors du rabattement vers l'avant, de la position d'utilisation vers la position de chargement au moyen du dispositif à ressort jusqu'à ce que soit atteinte une première position intermédiaire (A) où le dispositif à ressort ne génère aucun couple, où, en cas de dépassement de la position intermédiaire (A), une force de ressort (F2) orientée à l'opposé de la direction de la position de chargement (L) ou un couple de rotation (M2) orienté de manière correspondante peuvent être générés au moyen du dispositif à ressort (6).

2. Siège de véhicule à moteur selon la revendication 1, **caractérisé en ce qu'**une force de ressort (F2) orientée dans la direction de la position d'utilisation ou un couple de rotation (M2) correspondant peuvent être générés lors du rabattement vers l'arrière du dossier (3), de la position de chargement (L) vers la position d'utilisation (G) au moyen du dispositif à ressort (6) jusqu'à ce qu'une position intermédiaire (A) soit atteinte, et **en ce qu'**une force de ressort (F1) orientée à l'opposé de la direction de la position d'utilisation ou un couple de rotation (M1) correspondant peuvent être générés en cas de dépassement de la position intermédiaire (A).

3. Siège de véhicule à moteur selon la revendication 1 ou la revendication 2, **caractérisé en ce que** les deux forces de ressort (F1, F2) ou couples de rotation (M 1, M2) peuvent être générés par un élément de ressort (6.1) agissant dans les deux directions.

4. Siège de véhicule à moteur selon l'une des revendications précédentes, **caractérisé en ce que** le dispositif à ressort (6) comporte un autre élément de ressort (18), en particulier un dispositif élastique (19), lequel est raccordé par une extrémité au dossier (3) du siège de véhicule à moteur (1) au moyen d'un élément de transmission (17) préférentiellement flexible.

5. Siège de véhicule à moteur selon la revendication 4, **caractérisé en ce qu'**une force de friction peut être générée par l'élément de transmission (17) et/ou le deuxième élément de ressort (18) au niveau de l'axe de rotation (5) lors du rabattement vers l'avant du dossier (3).

6. Siège de véhicule à moteur selon la revendication 5, **caractérisé en ce que** la partie d'assise (2) est raccordée au dossier (3) par son extrémité arrière au moyen d'une articulation (13), de manière à être libre en rotation, et **en ce qu'**elle peut être descendue vers l'avant lors du rabattement du dossier, le deuxième élément de ressort (18) étant relié à la partie d'assise (2) par son autre extrémité.
